# EUROPÄISCHE PATENTANMELDUNG

(11) **EP 1 452 368 A2**
(43) Veröffentlichungstag der Anmeldung: **01.09.2004**
(21) Anmeldenummer: 03027659.6
(22) Anmeldetag: 03.12.2003
(51) Int. Cl.: B60J 7/185

(54) **Verschluss für ein abnehmbares Dach**

(30) Priorität: 28.02.2003 DE 10308770
(71) Anmelder: Dr.Ing. h.c.F. Porsche Aktiengesellschaft, 70435 Stuttgart (DE)
(72) Erfinder: Scholz, Andre, 75446 Wiernsheim (DE); Armbruster, Reiner, 75417 Mühlacker (DE); Braun, Wolfgang, 73061 Ebersbach (DE)

(57) **Zusammenfassung**

Dieser Verschluss ist für ein abnehmbares Dach eines Kraftfahrzeugs, insbesondere Personenkraftwagens, geeignet, das unter Vermittlung eines Verriegelungsorgans des Verschlusses an einem festen Strukturteil bspw. einem Rollbügel eines Aufbaus des Personenkraftwagens gehalten ist. Dabei weist der Verschluss ein erstes Betätigungselement und ein zweites Betätigungselement auf, welches erste Betätigungselement oberflächenbündig vom zweiten Betätigungselement umgeben wird. Die Betätigungselemente wirken in der Weise zusammen, dass erst nach Bedienung des ersten Betätigungselements das zweite Betätigungselement aus einer Schließstellung in eine Offenstellung bewegbar ist.

Damit der Verschluss sich bei geringem Raumanspruch durch einfache Bauweise und gute Funktion auszeichnet bewirkt das erste Betätigungselement durch eine Hubbewegung und das zweite Betätigungselement durch eine Drehbewegung die Offenstellung des Verschlusses, und das Verschlussorgan des Verschlusses ist über eine Lagerwelle mit dem zweiten Betätigungselement drehfest verbunden.

## Beschreibung

Die Erfindung bezieht sich auf einen Verschluss für ein abnehmbares Dach eines Kraftfahrzeugs, insbesondere Personenkraftwagens nach dem Oberbegriff des Patentanspruchs 1.

Ein bekannter Verschluss, EP 0 863 032 Bl, der eingangs genannten Gattung ist zwischen einem vorderen Querrahmen eines Daches und einem oberen Querstück eines Windschutzscheibenrahmens vorgesehen. Der Verschluss hält den Querrahmen am Querstück in der Dachschließstellung unter Spannung in Lage und umfasst ein erstes Betätigungselement und ein zweites Betätigungselement. Die Betätigungselemente werden durch einarmige Hebel gebildet. Dabei umgibt das zweite Betätigungselement das erste Betätigungselement oberflächenbündig. Außerdem wirken die beiden Betätigungselemente derart zusammen, dass erst nach Betätigung des ersten Betätigungselements das zweite Betätigungselement in eine Verschlussoffenstellung bewegbar ist.

Aus der DE 34 13 379 C2 geht eine Verriegelungsvorrichtung für ein Verdeck am Windschutzscheibenrahmen eines Kraftfahrzeugs hervor, die unter Vermittlung eines Verriegelungsorgans an einem Verdeckrahmen mit einer Aufnahme am Windschutzscheibenrahmen zusammenwirkt. Das Verriegelungsorgan weist eine Kurbel mit einem Verriegelungsbolzen auf, der in eine Kulisse der Aufnahme eingreift. Es ist Aufgabe der Erfindung, einen Verschluss für ein abnehmbares Dach zu schaffen, der bei geringem Raumanspruch sich durch einfache Bauweise und gute Funktion auszeichnet.

Erfindungsgemäß wird diese Aufgabe durch die Merkmale des Patentanspruchs gelöst. Weitere, die Erfindung ausgestaltende Merkmale sind in den Unteransprüchen enthalten.

Die mit der Erfindung hauptsächlich erzielten Vorteile sind darin zu sehen, dass das erste Betätigungselement hubbeweglich und das zweite Betätigungselement drehbeweglich ausgebildet sind, wodurch sich räumlich günstige Verhältnisse realisieren lassen. Letzteres wird auch noch durch die Verbindung der Lagerwelle des Verschlussorgans mit dem zweiten Betätigungselement unterstützt. Dank dieser Ausbildung ist auch der bauliche Aufwand gering und der Verschluss arbeitet funktionsgerecht. Mit der Rasteinrichtung und der Feder wird sichergestellt, dass das zweite Betätigungselement zum einen in einer Schließstellung und zum anderen in einer Offenstellung gehalten wird. Schließlich unterstützt die Führungseinrichtung ein gutes Zusammenwirken der Betätigungselemente des Verschlusses.

In der Zeichnung wird ein Ausführungsbeispiel gezeigt, das nachstehend näher beschrieben ist.

Es zeigen
- Fig. 1: eine Schrägansicht von unten auf ein abnehmbares Dach mit dem Verschluss nach der Erfindung,
- Fig. 2: einen Längsschnitt durch das abnehmbares Dach eines Kraftfahrzeugs mit dem Verschluss nach der Erfindung,
- Fig. 3: eine Seitenansicht des Verschlusses in Einbaulage,

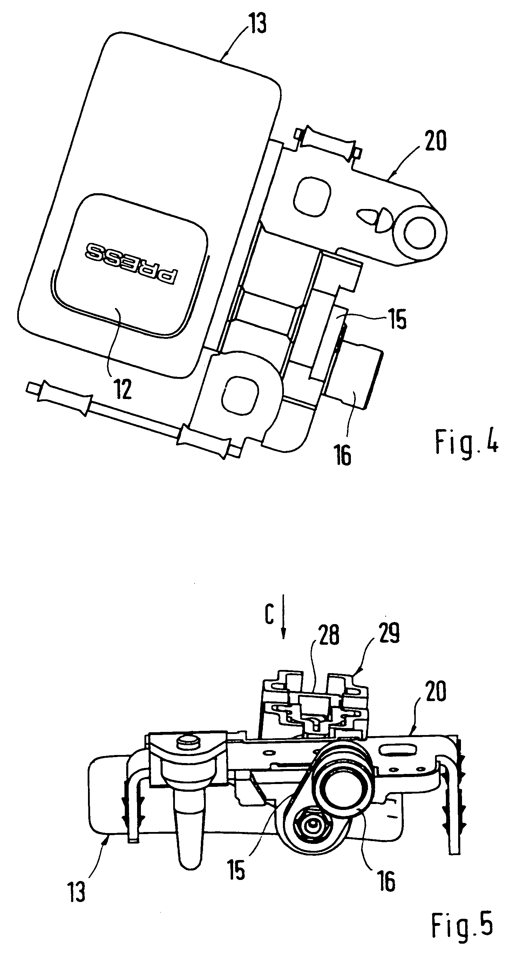

- Fig. 4: ein Ansicht in Pfeilrichtung A der Fig. 2,
- Fig. 5: eine Ansicht in Pfeilrichtung B der Fig. 3,
- Fig. 6: eine Ansicht in Pfeilrichtung C der Fig. 5,
- Fig. 7: einen Schnitt nach der Linie Vll-Vll der Fig. 3,
- Fig. 8: einen Schnitt nach der Linie llX-llX der Fig. 3.

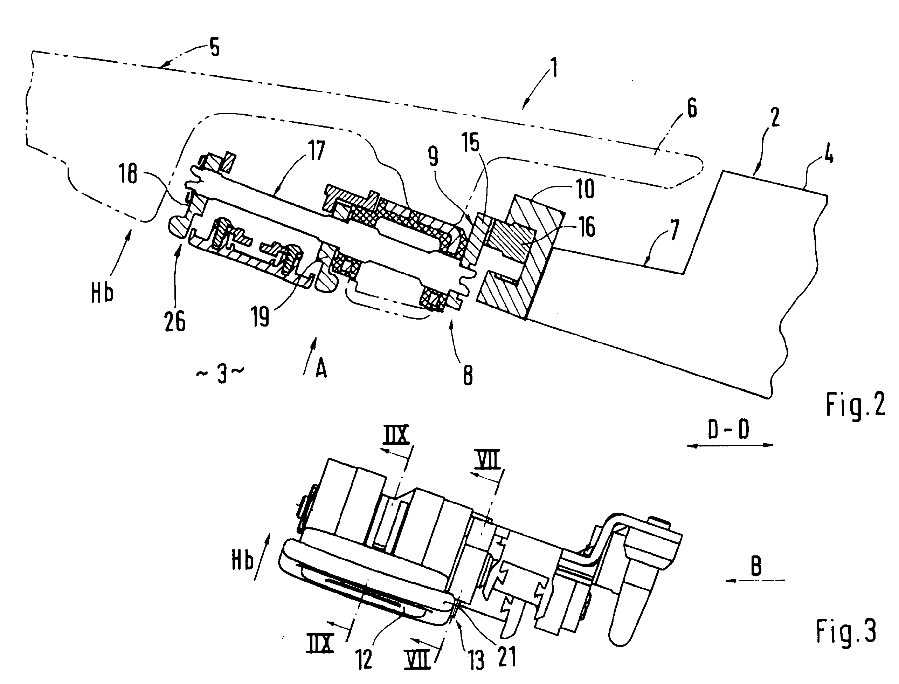

Von einem Personenkraftwagen 1 bspw. der Sportwagengattung ist lediglich ein Teilbereich eines Aufbaus 2 dargestellt, der eine feststehendes Strukturteil in Gestalt eines sich quer zur Fahrzeuglängsrichtung D-D erstreckenden einen Fahrgastraum 3 überspannenden Rollbügels 4 umfasst. Mit dem Rollbügel 4 verbunden ist ein abnehmbares bspw. aus formsteifem Kunststoff bestehendes Dach 5, das mit einer hinteren Dachwand 6 an eine einen Dichtkörper aufnehmende Stufe 7 des Rollbügels 4 angeschlossen ist. Das Dach 5 ist unter Vermittlung eines Verschlusses 8 am Rollbügel 4 gehalten, welcher am Dach 5 befestigte Verschluss 8 mittels eines Verriegelungsorgans 9 in eine Aufnahme 10 des Rollbügels 4 eingreift - Fig. 2 -. Ein Verriegelungsorgan und eine Aufnahme dieser Art werden in der eingangs genannten DE 34 13 379 C2 ausführlich beschrieben.

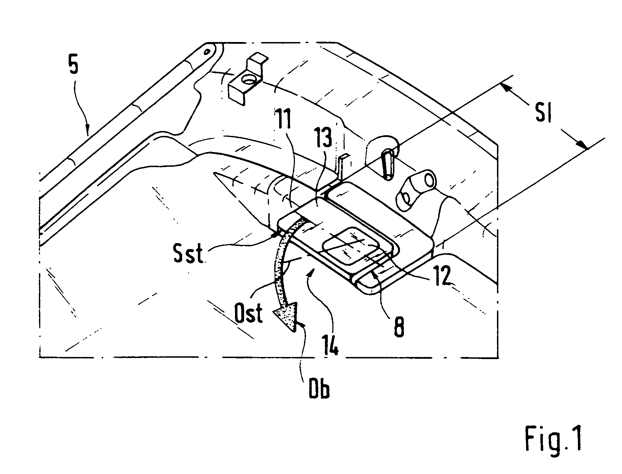

Der Verschluss 8 ist versenkt in einer Ausformung 11 des Dachs 5 angeordnet - Fig.1und umfasst ein erstes Betätigungselement 12 und ein zweites Betätigungselement 13, die plattenartig ausgebildet und als Baueinheit zusammengefasst sind. Dabei wird das erste Betätigungselement 12 vom zweiten Betätigungselement 13 umgeben und beide Betätigungselemente sind auf ihrer sichtbaren Seite 14 oberflächenbündig zueinander ausgerichtet. Die Form des zweiten Betätigungselements 13 ist rechteckig, und eine längere Seite SI des zuletzt genannten ist quer zur Fahrzeuglängsrichtung D-D ausgerichtet. Das erste Betätigungselement 12 weist eine quadratische Form auf und ist andersfarbig gestaltet oder z. B. mit einer Funktionssymbolik und/oder Funktionsbeschriftung versehen. Die Betätigungselemente 12 und 13 sind konstruktiv so gestaltet, dass erst nach Bedienung des ersten Betätigungselements 12 das zweite Betätigungselement 13 aus einer Schließstellung Sst in eine Offenstellung Ost bewegbar ist. Die Offenstellung Ost des zweiten Betätigungselements 13 wird durch eine Hubbewegung Hb des ersten Betätigungselements 12 und eine Drehbewegung Db des zweiten Betätigungselements 13 bewirkt. In diesem Zusammenhang ist das Verschlussorgan 9, das eine Kurbel 15 mit einem Schließzapfen 16 umfasst, über eine Lagerwelle 17 mit dem zweiten Betätigungselement 13 drehfest verbunden. Die Lagerwelle 17 wird von zwei mit Abstand zueinander angeordneten Lagerkonsolen 18 und 19 aufgenommen, die an einer Lagerplatte 20 des Verschlusses 8 angebracht sind.

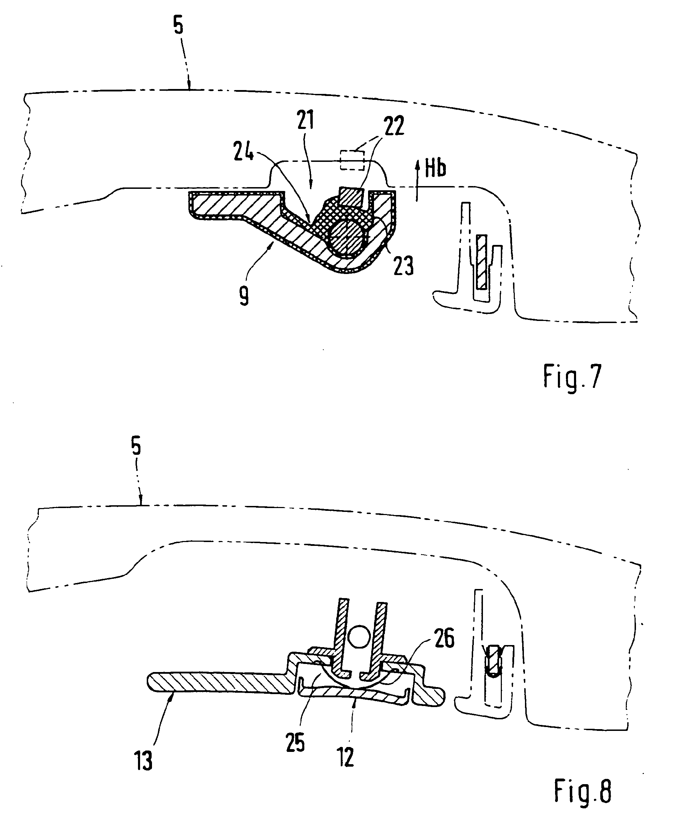

Zwischen dem ersten Betätigungselement 12 und der Lagerplatte ist eine Rasteinrichtung 21 vorgesehen - Fig. 3 und 7 -, die durch eine Rastnase 22 des ersten Betätigungselements 12 und eine erste Aufnahme 23 gebildet wird. In der Schließstellung Sst des Verschlusses 8 bzw. des ersten Betätigungselements 12 ruht die Rastnase 22 in der ersten Aufnahme 23. Durch eine Hubbewegung Hb des ersten Betätigungselements 12 wird die Rastnase 22 außer Eingriff mit der ersten Aufnahme 23 gebracht - Fig. 7 -, wodurch mit dem zweiten Betätigungselement 13 die Drehbewegung Db ausführbar ist - Fig. 1 -. Außerdem weist die Rasteinrichtung 22 eine zweite Aufnahme 24 auf, die im Winkel zur ersten Aufnahme 23 verläuft; in der zweiten 24 Aufnahme liegt die Rastnase 22, wenn der Verschlusses 8 sich in der Offenstellung Ost befindet.

In Fig. 8 ist dargestellt, dass das erste Betätigungselement 12 gegen die Wirkung einer Federelements 25 betätigbar ist. Das Federelement 25 ist eine Blattfeder 26, die zwischen dem ersten Betätigungselement 12 und dem zweiten Betätigungselement 13 eingesetzt ist.

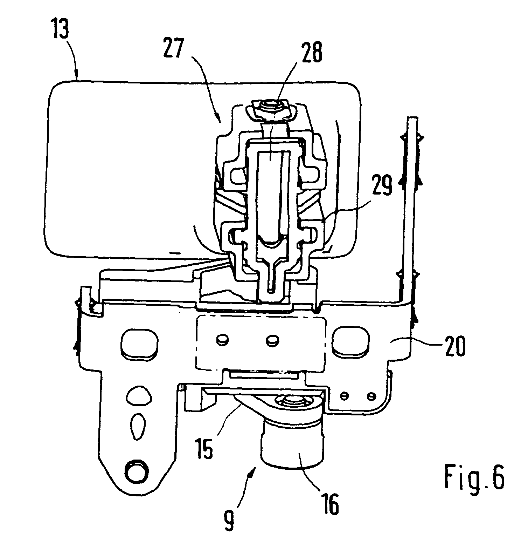

Schließlich wirken das erste Betätigungselement 12 und das zweite Betätigungselement 13 mittels einer die Hubbewegung Hb des ersten Betätigungselements bewerkstelligende Führungsvorrichtung 27 zusammen. Die Führungsvorrichtung 27 wird durch einen Führungszapfen 28 des ersten Betätigungselements 12 und einen Führungskanal 29 des zweiten Betätigungselements 13 gebildet - Fig. 6 und 7 -.

## Patentansprüche

1. Verschluss für ein abnehmbares Dach eines Kraftfahrzeugs, insbesondere Personenkraftwagens, das unter Vermittlung eines Verriegelungsorgans des Verschlusses an einem festen Strukturteil bspw. einem Rollbügel eines Aufbaus des Personenkraftwagens gehalten ist, und der Verschluss ein erstes Betätigungselement und ein zweites Betätigungselement aufweist, welches erste Betätigungselement oberflächenbündig vom zweiten Betätigungselement umgeben wird, wobei die Betätigungselemente derart zusammenwirken, dass erst nach Bedienung des ersten Betätigungselements das zweite Betätigungselement aus einer Schließstellung in eine Offenstellung bewegbar ist, **dadurch gekennzeichnet, dass** das erste Betätigungselement (12) durch eine Hubbewegung (Hb) und das zweite Betätigungselement durch eine Drehbewegung (Db) die Offenstellung (Ost) des Verschlusses (8) bewirkt und das Verschlussorgan (9) des Verschlusses (8) über eine Lagerwelle (17) mit dem zweiten Betätigungselement (13) drehfest verbunden ist.

2. Verschluss nach Anspruch 1, **dadurch gekennzeichnet, dass** die Lagerwelle (17) von Lagerkonsolen (18 und 19) einer Lagerplatte (20) des Verschlusses (8) aufgenommen wird.

3. Verschluss nach den Ansprüchen 1 und 2, **dadurch gekennzeichnet, dass** zwischen dem ersten Betätigungselement (12) und der Lagerplatte (20) eine Rasteinrichtung (21) wirksam ist, die durch eine Rastnase (22) des ersten Betätigungselements (12) und eine erste Aufnahme (23) gebildet wird, wobei in der Schließstellung (Sst) des Verschlusses (8) die Rastnase (22) in der ersten Aufnahme (23) ruht.

4. Verschluss nach den Ansprüchen 1 und 3, **dadurch gekennzeichnet, dass** die Rasteinrichtung eine zweite Aufnahme für die Rastnase aufweist, wobei in der Offenstellung (Ost) des Verschlusses (8) die Rastnase (22) des ersten Betätigungselements (12) in der zweiten Aufnahme (24) ruht.

5. Verschluss nach den Ansprüchen 1 und 3, **dadurch gekennzeichnet, dass** das erste Betätigungselement (12) gegen die Wirkung eines Federelements (25) betätigbar ist.

6. Verschluss nach Anspruch 5, **dadurch gekennzeichnet, dass** das Federelement (25) eine Blattfeder (26) ist, die zwischen dem ersten Betätigungselement (12) und dem zweiten Betätigungselement (13) eingesetzt ist.

7. Verschluss nach Anspruch 1, **dadurch gekennzeichnet, dass** das erste Betätigungselement (12) und das zweite Betätigungselement (13) mittels einer Führungsvorrichtung (27) zusammenarbeiten.

8. Verschluss nach Anspruch 7, **dadurch gekennzeichnet, dass** die Führungsvorrichtung (27) durch einen Führungszapfen (28) des ersten Betätigungselementes (12) und einen Führungskanal (29) des zweiten Betätigungselements (13) gebildet wird.

9. Verschluss nach Anspruch 1, **dadurch gekennzeichnet, dass** das erste Betätigungselement (12) und das zweite Betätigungselement (13) auf der sichtbaren Seite (14) farblich unterschiedlich sind.

10. Verschluss nach Anspruch 1, **dadurch gekennzeichnet, dass** zumindest das erste Betätigungselement (12) auf der sichtbaren Seite (14) mit einer Funktionssymbolik und/oder einer Funktionsbeschriftung versehen ist.
